# EUROPÄISCHE PATENTSCHRIFT

(11) **EP 4 521 907 B1**
(45) Veröffentlichungstag und Bekanntmachung des Hinweises auf die Patenterteilung: **18.02.2026**
(21) Anmeldenummer: 23725107.9
(22) Anmeldetag: 02.05.2023
(51) Int. Cl.: A01C 7/20

(54) **REIHENEINHEIT FUER EINE LANDWIRTSCHAFTLICHE SAEMASCHINE UND VERFAHREN ZUR BESTIMMUNG EINER ABLAGETIEFE UND/ODER BEDECKUNGSHOEHE**
ROW UNIT FOR AGRICULTURAL PLANTER AND METHOD FOR DETERMINING SEED DEPOSITION DEPTH AND/OR SEED COVERING HEIGHT
UNITÉ DE RANG POUR PLANTEUR AGRICOLE ET PROCÉDÉ POUR DÉTERMINER LA PROFONDEUR DE DÉPÔT DE SEMENCES ET/OU LA HAUTEUR DE COUVERTURE DE SEMENCES

(30) Priorität: 10.05.2022 DE 102022111583
(43) Veröffentlichungstag der Anmeldung: 19.03.2025
(73) Patentinhaber: Amazonen-Werke H. Dreyer SE & Co. KG, 49205 Hasbergen (DE)
(72) Erfinder: ARNOLD, Roland, 27777 Ganderkesee (DE); MERTENS, Daniel, 26121 Oldenburg (DE); WESSELS, Mario, 27777 Ganderkesee (DE); WESSELS, Thomas, 49080 Osnabrück (DE); KOCH, Jens, 29525 Uelzen (DE); BANGERT, Waldemar, 49626 Berge (DE)
(86) Internationale Anmeldenummer: PCT/EP2023/061464
(87) Internationale Veröffentlichungsnummer: WO 2023/217570

(56) Entgegenhaltungen:
- EP-A1- 3 704 926
- EP-A1- 3 821 707
- EP-A1- 4 162 782
- WO-A1-2017/197292
- WO-A1-2018/085095
- US-A1- 2019 254 223
- US-A1- 2020 107 487

## Beschreibung

Die Erfindung betrifft eine Reiheneinheit für eine landwirtschaftliche Sämaschine zum Ablegen von Verteilgut auf eine landwirtschaftlichen Nutzfläche gemäß dem Oberbegriff des Patentanspruches 1, eine landwirtschaftliche Sämaschine gemäß dem Oberbegriff des Patentanspruches 7 und ein Verfahren zur Bestimmung einer Ablagetiefe und/oder Bedeckungshöhe eines mittels einer Reiheneinheit einer landwirtschaftlichen Sämaschine auf einer landwirtschaftlichen Nutzfläche abgelegten Verteilguts gemäß dem Oberbegriff des Patentanspruches 8.

Auf dem Gebiet der Landwirtschaft sind eine Vielzahl unterschiedlicher Varianten von Sämaschinen zum Ausbringen bzw. Ablegen von Verteilgut, insbesondere Saatgut und/oder Dünger, bekannt. Hierzu zählen neben pneumatischen und/oder mechanischen Sämaschinen auch Einzelkornsämaschinen, welche mittels wenigstens einer Reiheneinheit bzw. einem Säaggregat dazu eingerichtet sind, das Verteilgut auf einer landwirtschaftlichen Nutzfläche abzulegen.

Eine gattungsgemäße Reiheneinheit ist beispielsweise aus der Druckschrift EP3704 926 A1 bekannt. Demnach umfasst die Reiheneinheit wenigstens ein Furchenöffnungselement, insbesondere Schar, welches zum Öffnen einer Säfurche vorgesehen ist. Des Weiteren umfasst die Reiheneinheit wenigstens eine Materialablagevorrichtung, welche zum bedarfsgerechten Zubringen des Verteilguts und zum Ablegen des Verteilguts innerhalb der Säfurche vorgesehen ist. Darüber hinaus weist die Reiheneinheit wenigstens ein Tiefenführungselement auf, welches zum Einstellen einer definierten Ablagetiefe und/oder Bedeckungshöhe für das Verteilgut und/oder einer definierten Eindringtiefe des Furchenöffnungselements in den Boden der Nutzfläche vorgesehen ist. Daneben weist die Reiheneinheit wenigstens eine zugeordnete elektronische Auswertevorrichtung auf, welche mehrere der Reiheneinheit zugeordnete Sensoren umfasst die dazu eingerichtet sind, die Nutzfläche, insbesondere die Säfurche und/oder den Boden der Nutzfläche berührungslos, innerhalb eines den jeweiligen Sensoren zugeordneten Erfassungsbereichs abzutasten. Die Auswertevorrichtung ist dabei dazu eingerichtet, die Ablagetiefe und/oder Bedeckungshöhe des in der Säfurche abgelegten Verteilguts und/oder die Eindringtiefe des Furchenöffnungselements anhand der Sensoren zu bestimmen. Die Auswertevorrichtung ist hierfür insbesondere dazu eingerichtet, einzelne Sensorsignale der mehreren Sensoren zur Bestimmung der Ablagetiefe und/oder Bedeckungshöhe miteinander zu verrechnen und/oder zu berücksichtigen.

Nachteilig an derartig ausgeführten Reiheneinheiten ist, dass wenigstens einer der mehreren Sensoren, insbesondere Erfassungsbereiche, in Fahrt- und/oder Arbeitsrichtung vor dem wenigstens einen Tiefenführungselement angeordnet ist und/oder sich befindet. Insbesondere ist hierbei nachteilig, dass die Ablagetiefe und/oder Bedeckungshöhe anhand von Sensoren bestimmt wird, von denen, insbesondere nur, einer der mehreren Sensoren hinter und wenigstens ein anderer der mehreren Sensoren vor dem Tiefenführungselement angeordnet ist und/oder sich befindet. Bodenbewegungen der Nutzfläche, welche von den Bedingungen des Bodens, einer Aufstandskraft des wenigstens einen Tiefenführungselements (Schardruck der Reiheneinheit) und/oder durch das Furchenöffnungselement abhängig sind, sind mit derartig angeordneten Sensoren, insbesondere Erfassungsbereichen, nur unzureichend erfassbar und/oder berücksichtigbar.

Aus der Druckschrift US 2019/254223 A1 ist ferner eine Reiheneinheit bekannt geworden, bei welcher der Erfassungsbereich der mehreren Sensoren, während dem Ablegen des Verteilguts und in Fahrt- und/oder Arbeitsrichtung, hinter einer Aufstandsfläche des wenigstens einen Tiefenführungselements angeordnet ist und/oder sich befindet.

Die Ablagegenauigkeit und/oder Ablagequalität des Verteilguts könnte jedoch in einfacher Weise weiter verbessert werden, wenn derartige Bodenbewegungen bzw. Verdichtungen des Ackerbodens mit höheren Präzision erfasst und/oder berücksichtigt werden. Die der Erfindung zugrundeliegende Aufgabe besteht somit darin, die Präzision bei der sensorgestützten Ablagetiefen- und/oder Bedeckungshöhenerfassung des Verteilguts weiter zu erhöhen.

Diese Aufgabe wird erfindungsgemäß durch die kennzeichnenden Merkmale des Anspruchs 1 gelöst.

In Folge dieser Maßnahme ist der hinter dem wenigstens einen Tiefenführungselement befindliche Bereich der Nutzfläche bzw. des Bodens über mehrere Sensoren gleichzeitig erfassbar. Die mehreren Sensoren erfassen hierbei vorzugsweise jeweils unterschiedliche Bereiche des Bodens. Alternativ oder zusätzlich können die Sensoren derart angeordnet und/oder ausgerichtet sein, dass sich die Erfassungsbereiche zumindest teilweise überlappen. Die unterschiedlichen Erfassungsbereich können hierbei in und/oder quer zur Fahrt- und/oder Arbeitsrichtung versetzt zueinander angeordnet sein. Ferner kann der Reiheneinheit auch wenigstens ein weiterer Sensor zugeordnet sein, welcher dazu eingerichtet ist, die Nutzfläche bzw. den Boden in Fahrt- und/oder Arbeitsrichtung vor dem wenigstens einen Tiefenführungselement zu erfassen. Darüber hinaus ist die Auswertevorrichtung bevorzugt zusätzlich dazu eingerichtet, Geometrie- und/oder Positionsinformationen der Reiheneinheit zur Bestimmung Ablagetiefe und/oder Bedeckungshöhe zu berücksichtigen. Insbesondere ist dadurch eine jeweilige Sensorposition und/oder Sensorlage zum Boden (z.B. Sensorabstand zum Boden) berücksichtigbar. Die Auswertevorrichtung ist vorzugsweise ferner dazu eingerichtet, die einzelnen Sensorsignale der mehreren Sensoren zur Bestimmung der Ablagetiefe und/oder Bedeckungshöhe des Verteilguts und/oder zur Bestimmung der Eindringtiefe des Furchenöffnungselements zu berücksichtigen. Eine derartige Ausführungsform weist den entscheidenden Vorteil auf, dass der Bereich und/oder mehrere unterschiedliche Bereiche hinter dem wenigstens einen Tiefenführungselements über mehrere Sensoren erfassbar sind, wodurch die Präzision der Ablagetiefen- und/oder Bedeckungshöhenerfassung des Verteilguts weiter gesteigert ist.

Die Reiheneinheit umfasst vorzugsweise mehrere Tiefenführungselemente, welche jeweils einem oder mehreren Furchenöffnungselementen zugeordnet sind. Die Tiefenführungselemente sind vorzugsweise nach Art von Tragrollen bzw. Tiefenführungsrollen oder dergl. ausgebildet. Besonders bevorzugt ist wenigstens eines der Tiefenführungselemente in Fahrtrichtung gesehen links und wenigstens ein anderes der Tiefenführungselemente rechts vom Furchenöffnungselement, insbesondere der Säfurche, angeordnet.

Das wenigstens eine Furchenöffnungselement ist ferner bevorzugt nach Art eines Schars, insbesondere eines Meißel- bzw. Zinkenschars oder eines Scheibenschars, ausgebildet. Die Reiheneinheit umfasst jedoch besonders bevorzugt mehrere Furchenöffnungselemente, welche vorzugsweise ein Doppelscheibenschar bilden.

Die mehreren Sensoren können nach Art von optischen und/oder akustischen Sensoren ausgebildet sein. Insbesondere sind hierbei Sensoren vorgesehen, welche nach Art von Ultraschall-, Radar-, Lidar- und/oder Lasersensoren ausgebildet sind. Ferner sind auch kameragestützte bzw. bilderfassende Sensoren denkbar. Alternativ oder zusätzlich ist auch denkbar, unterschiedlich ausgebildete Sensoren miteinander zu kombinieren.

In einer bevorzugten Ausführungsform der erfindungsgemäßen Reiheneinheit sind die mehreren Sensoren in Fahrt- und/oder Arbeitsrichtung der Reiheneinheit hinter der Aufstandsfläche, insbesondere einer Drehachse, des wenigstens einen Tiefenführungselements angeordnet. Die Aufstandsfläche bildet hierbei insbesondere den Bereich des Bodens, über welchen das wenigstens eine Tiefenführungselement auf dem Boden abgestützt ist und/oder über welchen das Gewicht und/oder ein Schardruck der Reiheneinheit zumindest im Wesentlichen auf den Boden übertragen wird. Bei mehreren Tiefenführungselementen weist jedes der Tiefenführungselemente jeweils eine Aufstandsfläche auf. Die Tiefenführungselemente sind vorzugsweise nach Art von Tiefenführungsrollen ausgebildet, welche um eine quer zur Fahrt- und/oder Arbeitsrichtung angeordnete Achse bzw. Drehachse drehbar angeordnet sind. Durch eine derartige Ausführungsform sind die Sensoren besonders nah an den vorgesehenen Erfassungsbereichen angeordnet, wodurch der Bereich hinter dem wenigstens einen Tiefenführungselement mit besonders großer Präzision und/oder ungehindert erfassbar ist.

Bei der erfindungsgemäßen Reiheneinheit ist der Erfassungsbereich wenigstens einer der mehreren Sensoren zumindest teilweise auf einen vom wenigstens einen Tiefenführungselement angedrückten Bereich des Bodens, vorzugsweise eine Laufspur des Tiefenführungselements, ausgerichtet. Wenigstens einer der Sensoren ist hierbei dazu eingerichtet, die Laufspur des wenigstens einen Tiefenführungselements, insbesondere die Tiefe der Laufspur, zu erfassen. Die Laufspur ist hierbei ein vom wenigstens einen Tiefenführungselement überfahrener bzw. gebildeter Streifen auf dem Boden der Nutzfläche, welcher vom Tiefenführungselement unmittelbar angedrückt und/oder verdichtet wird. Bei Verwendung mehrerer Tiefenführungselemente, bildet jedes der Tiefenführungselemente eine eigene Laufspur auf dem Boden aus.

Ferner ist bei der erfindungsgemäßen Reiheneinheit der Erfassungsbereich wenigstens eines der mehreren Sensoren zumindest teilweise auf die geöffnete Säfurche ausgerichtet. Der wenigstens eine Sensor ist hierbei dazu eingerichtet, die Tiefe und/oder Kontur der Säfurche zu erfassen.

In einer Weiterbildung der Reiheneinheit ist der Erfassungsbereich eines ersten der mehreren Sensoren auf den vom wenigstens einen Tiefenführungselement angedrückten Bereich des Bodens, vorzugsweise die Laufspur, und eines zweiten der mehreren Sensoren auf die geöffnete Säfurche ausgerichtet. Mit anderen Worten sind die mehreren Sensoren hierbei vorzugsweise derart angeordnet, dass wenigstens einer der Sensoren dazu eingerichtet ist, die Laufspur des wenigstens einen Tiefenführungselements zu erfassen, während wenigstens ein anderer der mehreren Sensoren dazu eingerichtet ist, die vom Furchenöffnungselement geöffnete und/oder ausgebildete Säfurche zu erfassen. Insbesondere ist dabei vorgesehen, dass die Auswertevorrichtung dazu eingerichtet ist, die Tiefe und/oder Kontur der Laufspur und der Säfurche zur Bestimmung der Ablagetiefe, Bedeckungshöhe und/oder der Eindringtiefe zu berücksichtigen bzw. miteinander zu verrechnen. Bei einer derartigen Ausführungsform werden von der Auswertevorrichtung unterschiedliche Höhenniveaus und/oder Bodenschichten der Nutzfläche berücksichtigt, wodurch die Genauigkeit bei der Bestimmung der Ablagetiefe, Bedeckungshöhe und/oder der Eindringtiefe noch weiter verbessert ist.

Bei der erfindungsgemäßen Reiheneinheit ist der Erfassungsbereich eines der mehreren Sensoren auf den vom wenigstens einen Tiefenführungselement angedrückten Bereich des Bodens, vorzugsweise die Laufspur des Tiefenführungselements, einerseits und die geöffnete Säfurche andererseits ausgerichtet. Somit ist der wenigstens eine Sensor dazu eingerichtet, sowohl die Tiefe und/oder Kontur der Säfurche als auch der Laufspur des Tiefenführungselements zu erfassen. Alternativ oder zusätzlich kann bei Verwendung mehrerer Tiefenführungselemente vorgesehen sein, dass wenigstens einer der Sensoren dazu eingerichtet ist, die Säfurche und die Laufspur des einen Tiefenführungselementes zu erfassen, während der wenigstens eine andere Sensor dazu eingerichtet ist, die Säfurche und die Laufspur des anderen Tiefenführungselements zu erfassen.

Weiterhin kann vorzugsweise vorgesehen sein, dass die Auswertevorrichtung dazu eingerichtet ist, einzelne Mittelwerte anhand der von den Sensoren erfassten Abstände zum Boden zu generieren und diese bei der Bestimmung der Ablagetiefe und/oder Bedeckungshöhe zu berücksichtigen. Alternativ oder zusätzlich wäre auch denkbar, dass die Auswertevorrichtung dazu eingerichtet ist, auf der Basis der Sensorsignale Mittelwerte für die Ablagetiefe und/oder Bedeckungshöhe zu bestimmen.

**In** einer weiteren bevorzugten Ausführungsform der erfindungsgemäßen Reiheneinheit sind die Sensoren, vorzugsweise die Erfassungsbereiche der Sensoren, quer zur Fahrt- und/oder Arbeitsrichtung der Reiheneinheit zueinander versetzt.

Die Reiheneinheit umfasst ferner bevorzugt wenigstens ein Furchenverschließungs- und/oder Andrückelement, welches in Fahrt- und/oder Arbeitsrichtung, vorzugsweise beabstandet, hinter dem Furchenöffnungselement angeordnet ist. Das Furchenverschließungs- und/oder Andrückelement ist dazu eingerichtet, die Säfurche nach dem Ablegen des Verteilguts zumindest teilweise zu verschließen und/oder anzudrücken.

In einer bevorzugten Weiterbildung der erfindungsgemäßen Reiheneinheit ist der Erfassungsbereich eines der mehreren Sensoren hinter und der Erfassungsbereich wenigstens eines anderen der mehreren Sensoren vor dem Furchenverschließungs- und/oder Andrückelement angeordnet. Das wenigstens eine Furchenverschließungs- und/oder Andrückelement ist vorzugsweise nach Art einer Reflexions- und/oder Andruckrolle ausgebildet. Die Reiheneinheit umfasst vorzugsweise mehrere Furchenverschließungs- und/oder Andrückelemente, welche besonders bevorzugt zueinander angestellt und/oder angewinkelt sind. Bei derartig angeordneten Sensoren ist die Auswertevorrichtung dazu eingerichtet, den vom Furchenverschließungs- und/oder Andrückelement zusätzlich auf die Säfurche aufgeworfenen und/oder verdichteten Boden zu berücksichtigen.

Darüber hinaus ist eine erfindungsgemäße Reiheneinheit bevorzugt, bei der wenigstens einer der mehreren Sensoren derart angeordnet und dazu eingerichtet ist, das von einer hinter dem Furchenöffnungselement und/oder dem Tiefenführungselement angeordneten Fang- und/oder Andrückrolle in die Säfurche zumindest teilweise angedrückte Verteilgut zu erfassen. Die Auswertevorrichtung ist hierbei vorzugweise dazu eingerichtet, das erfasste und/oder angedrückte Verteilgut bei der Bestimmung der Ablagetiefe und/oder Bedeckungshöhe zu berücksichtigen. Besonders bevorzugt ist die Auswertevorrichtung hierbei anhand des erfassten angedrückten Verteilguts dazu eingerichtet, die Höhe und/oder den Anteil mit dem das Verteilgut in die Säfurche angedrückt ist zu bestimmen. Diese Ausführungsform weist eine besonders hohe Präzision bei der Bestimmung der Ablagetiefe und/oder Bedeckungshöhe des Verteilguts auf.

In einer anderen bevorzugten Ausführungsform der erfindungsgemäßen Reiheneinheit ist die Auswertevorrichtung dazu eingerichtet, die Plausibilität der erfassten und/oder bestimmten Ablagetiefe und/oder Bedeckungshöhe bzw. der Sensorsignale anhand vorgebbarer Betriebsparameter zu überprüfen. Die Auswertevorrichtung ist hierbei bevorzugt dazu eingerichtet, von den Sensoren generierte Sensorsignale in Abhängigkeit der Plausibilität, insbesondere der Betriebsparameter, zu berücksichtigen und/oder zu filtern. Als Betriebsparameter sind hierbei insbesondere ein vorgebbarer und/oder erfassbarer Schardruck und/oder eine vorgebbare und/oder erfassbare Aufstandskraft der Reiheneinheit vorgesehen. Alternativ oder zusätzlich kann anhand des Betriebsparameters auch eine Beschaffenheit der Nutzfläche, beispielsweise die Temperatur und/oder Feuchte des Bodens berücksichtigt werden.

Des Weiteren kann vorzugsweise auch vorgesehen sein, dass die Auswertevorrichtung dazu eingerichtet ist, dass Sensorsignal jeweils eines einzigen der Sensoren in unterschiedlicher Weise und in Abhängigkeit der Plausibilität zu berücksichtigen bzw. zu verrechnen. Bei einem Sensor, welcher dazu eingerichtet ist, sowohl die Säfurche als auch die Laufspur zu erfassen, kann somit je nach Plausibilität entweder der Abstand zur Säfurche oder zur Laufspur berücksichtigt werden.

Die Auswertevorrichtung kann ferner dazu eingerichtet sein, die Plausibilität einmalig oder wiederholend innerhalb eines vorgebbaren und/oder einstellbaren Zeitraums während des Arbeitsvorgangs zu überprüfen. Alternativ kann die Auswertevorrichtung auch dazu eingerichtet sein, die Plausibilität permanent bzw. während dem gesamten Arbeitsvorgang zu überprüfen. Die Auswertevorrichtung ist vorzugsweise dazu eingerichtet, die Sensorsignale in Abhängigkeit der Plausibilität, insbesondere der Betriebsparameter, mit unterschiedlicher Gewichtung zur Bestimmung der Ablagetiefe und/oder Bedeckungshöhe zu berücksichtigen. Die Auswertevorrichtung ist besonders bevorzugt dazu eingerichtet, in Abhängigkeit der Plausibilität, insbesondere der Betriebsparameter, unterschiedliche Sensorsignale zur Bestimmung der Ablagetiefe und/oder Bedeckungshöhe zu berücksichtigen. Hierbei kann beispielsweise vorgesehen sein, dass bei positiver Plausibilität ein zur Erfassung der Säfurche zugeordnetes Sensorsignal und bei einer negativen Plausibilität ein zu Erfassung der Laufspur zugeordnetes Sensorsignal (oder umgekehrt) von der Auswertevorrichtung berücksichtigt wird. Außerdem kann hierbei eine von den Betriebsparametern abhängige und (rechnerisch) zu erwartende Ablagetiefe und/oder Bedeckungshöhe vorgesehen sein, welche bei der Überprüfung der Plausibilität berücksichtigt und/oder insbesondere mit der anhand der Sensorsignale ermittelten Ablagetiefe und/oder Bedeckungshöhe abgeglichen wird. Ferner kann vorgesehen sein, dass bei negativer Plausibilität eine korrigierte Ablagetiefe und/oder Bedeckungshöhe von der Auswertevorrichtung bestimmt wird.

Die der Erfindung zugrunde liegende Aufgabe wird ebenso mit einer landwirtschaftlichen Sämaschine mit einer oder mehreren Reiheinheiten zum Ablegen von Verteilgut gelöst, wobei die eine oder die mehreren Reiheinheiten nach zumindest einer der vorstehend beschriebenen Ausführungsformen der erfindungsgemäßen Reiheneinheit ausgebildet sind. Hinsichtlich der Vorteile und Modifikationen der erfindungsgemäßen Sämaschine wird daher zunächst auf die Vorteile und Modifikationen der erfindungsgemäßen Reiheneinheit verwiesen.

Die landwirtschaftliche Sämaschine ist besonders bevorzugt nach Art einer Einzelkornsämaschine ausgebildet und zum Ablegen von Saatgut und/oder Dünger vorgesehen.

Die der Erfindung zugrundeliegende Aufgabe wird ferner durch ein Verfahren zur Bestimmung einer Ablagetiefe und/oder Bedeckungshöhe eines mittels einer Reiheneinheit einer landwirtschaftlichen Sämaschine auf einer landwirtschaftlichen Nutzfläche abgelegten Verteilguts gelöst, wobei die Reiheneinheit nach einer der vorstehend beschriebenen Ausführungsformen ausgebildet ist. Hinsichtlich der Vorteile und Modifikationen des erfindungsgemäßen Verfahrens zur Bestimmung einer Ablagetiefe und/oder Bedeckungshöhe wird somit zunächst auf die Vorteile und Modifikationen der erfindungsgemäßen Reiheneinheit verwiesen.

Beim erfindungsgemäßen Verfahren wird mittels wenigstens eines der Reiheneinheit zugeordneten Furchenöffnungselements, insbesondere Schars, eine Säfurche entlang der Nutzfläche geöffnet. Weiterhin wird mittels wenigstens einer der Reiheneinheit zugeordneten Materialablagevorrichtung das Verteilgut zugebracht und/oder innerhalb der Säfurche abgelegt. Während dessen wird mittels wenigsten einem der Reiheneinheit zugeordneten Tiefenführungselements eine definierte Ablagetiefe und/oder Bedeckungshöhe für das Verteilgut und/oder eine definierte Eindringtiefe des Furchenöffnungselements in den Boden der Nutzfläche eingestellt. Des Weiteren wird dabei mittels wenigstens einer der Reiheneinheit zugeordneten Auswertevorrichtung eine Ablagetiefe und/oder Bedeckungshöhe des in der Säfurche abgelegten Verteilguts bestimmt und/oder erfasst. Hierfür umfasst die Auswertevorrichtung mehrere Sensoren, welche die Nutzfläche, vorzugsweise die Säfurche und/oder den Boden der Nutzfläche berührungslos, innerhalb eines den jeweiligen Sensoren zugeordneten Erfassungsbereichs während des Ablegens des Verteilguts abtasten.

Bei einer besonders bevorzugten Ausführungsform des erfindungsgemäßen Verfahrens wird anhand der Sensoren, insbesondere dem Erfassungsbereich der Sensoren, die Nutzfläche, insbesondere die Säfurche und/oder der Boden der Nutzfläche, hinter der Aufstandsfläche des wenigstens einen Tiefenführungselements erfasst und/oder abgetastet.

Weitere Einzelheiten der Erfindung sind der Beispielsbeschreibung und den Zeichnungen zu entnehmen. Die Zeichnungen zeigen
- Fig.1: eine hinter einem Ackerschlepper angehangene als Einzelkornsämaschine ausgeführte landwirtschaftliche Sämaschine mit einer Mehrzahl erfindungsgemäßer Reiheneinheiten in perspektivischer Ansicht;
- Fig.2: eine erfindungsgemäße Reiheneinheit in perspektivischer Einzelansicht; und
- Fig.3: die erfindungsgemäße Reiheneinheit in einer Schnittansicht von hinten.

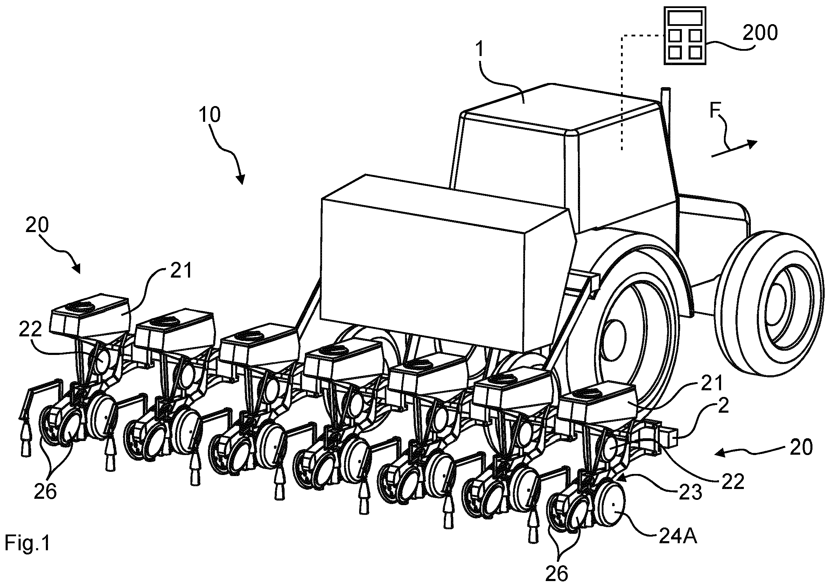

Eine hinter einem Ackerschlepper 1 angehangene und als Einzelkornsämaschine 10 ausgeführte landwirtschaftliche Sämaschine ist in Fig.1 zu sehen. Die Einzelkornsämaschine 10 weist eine Mehrzahl von quer zur Fahrtrichtung F an einem Balken 2 angeordnete Säaggregate auf, welche jeweils nach Art von landwirtschaftlichen Reiheneinheiten 20 ausgebildet und zum Ablegen von Verteilgut auf einer landwirtschaftlichen Nutzfläche vorgesehen sind.

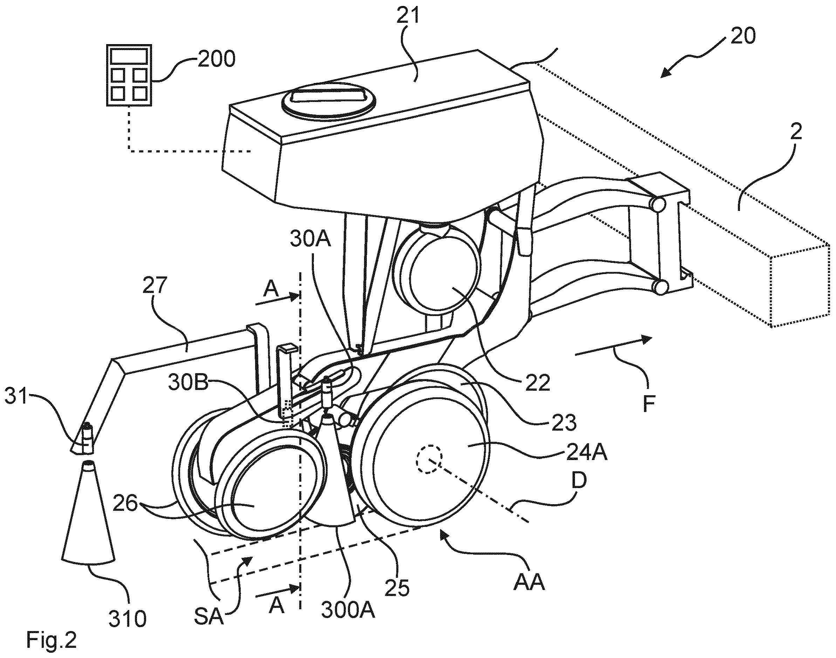

Wie in der Fig.2 besonders gut zu sehen ist, weisen die Reiheneinheiten 20 an ihrer Oberseite jeweils einen Behälter 21 zum Vorhalten des Verteilguts, hier Saatgut, auf. Von dem Behälter 21 gelangt das als Saatgut ausgeführte Verteilgut in ein nicht näher gezeigtes Vereinzelungsorgan einer Materialablagevorrichtung 22, von welchem es bedarfsgerecht und/oder in regelmäßigen Abständen zum Boden B der Nutzfläche hin zugebracht und in einer von mehreren hier nur teilweise gezeigten Furchenöffnungselementen 23 ausgebildeten bzw. geöffneten Säfurche 230 abgelegt wird. Die Furchenöffnungselemente 23 können hierbei nach Art an sich bekannter Doppelscheibenschare ausgebildet sein. Alternativ dazu kann die Reiheneinheit 20 auch nur ein Furchenöffnungselement 23 umfassen, welches beispielsweise nach Art eines Meißel- bzw. Zinkenschars ausgebildet ist. Ferner wäre auch eine Kombination unterschiedlicher Furchenöffnungselemente, beispielsweise wenigstens eines Scheibenschars mit einem Zinkenschar oder dergleichen, denkbar. Die Furchenöffnungselemente 23 dienen dazu im Boden B eine Säfurche 230 zu öffnen, in welche vereinzelte Saatkörner K des auszubringenden Verteilguts abgelegt werden.

Des Weiteren umfasst die Reiheneinheit 20 mehrere hier nach Art von Tiefenführungs- und/oder Tragrollen ausgebildete Tiefenführungselemente 24A, 24B, welche zum Einstellen einer definierten Ablagetiefe und/oder Bedeckungshöhe für das Verteilgut und/oder einer definierten Eindringtiefe der Furchenöffnungselemente 23 in den Boden B der Nutzfläche vorgesehen sind. Alternativ zum dargestellten Ausführungsbeispiel wäre auch eine Reiheneinheit 20 denkbar, welche nur ein Tiefenführungselement 24A, 24B aufweist. Die Tiefenführungselemente 24A, 24B sind hierbei um eine Drehachse D drehbar innerhalb der Reiheneinheit 20 angeordnet und stützen sich jeweils über eine Aufstandsfläche AA, AB auf dem Boden B ab. Über die jeweilige Aufstandsfläche AA, AB werden das Gewicht und/oder ein einstellbarer Schardruck der Reiheneinheit 20 zum Boden B übertragen.

Darüber hinaus ist der Reiheneinheit 20 eine elektronische Auswertevorrichtung 200 zugeordnet, welche mehrere der Reiheneinheit 20 zugeordnete Sensoren 30A, 30B, 31 umfasst. Die Sensoren 30A, 30B, 31 sind hier an der Reiheneinheit 20 angeordnet und dazu eingerichtet, die Nutzfläche, insbesondere die Säfurche 230 und/oder den Boden B der Nutzfläche berührungslos, innerhalb eines den jeweiligen Sensoren 30A, 30B, 31 zugeordneten Erfassungsbereichs 300A, 300B, 310 abzutasten. Die Sensoren 30A, 30B, 31 sind hierbei erfindungsgemäß derart angeordnet, dass der Erfassungsbereich 300A, 300B, 310 der mehreren Sensoren 30A, 30B, 31 während dem Ablegen des Verteilguts und in Fahrt- und/oder Arbeitsrichtung F der Reiheneinheit 20 hinter der Aufstandsfläche AA, AB des der Tiefenführungselemente 24A, 24B angeordnet ist und/oder sich befindet. Ferner ist die Auswertevorrichtung 200 hierbei dazu eingerichtet, die Ablagetiefe und/oder Bedeckungshöhe des in der Säfurche 230 abgelegten Verteilguts und/oder die Eindringtiefe des Furchenöffnungselements 23 anhand der Sensoren 30A, 30B, 31 bzw. des erfassten und/oder abgetasteten Bodens B der Nutzfläche zu bestimmen.

Wie in der Fig.2 insbesondere zu erkennen ist, sind die mehreren Sensoren 30A, 30B, 31 hierbei in Fahrt- und/oder Arbeitsrichtung F der Reiheneinheit 20 hinter der Aufstandsfläche AA, AB, insbesondere einer Drehachse D, der Tiefenführungselemente 24A, 24B angeordnet.

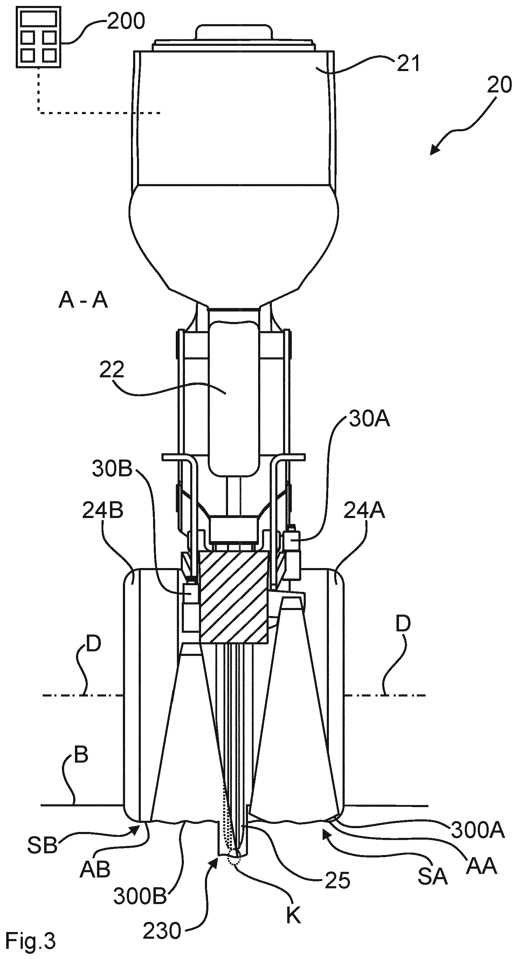

Wie in der Fig.3 besser zu erkennen ist, ist der Erfassungsbereich 300A, 300B eines ersten und zweiten der mehreren Sensoren 30A, 30B zumindest teilweise auf einen von den Tiefenführungselementen 24A, 24B angedrückten Bereich des Bodens B, insbesondere eine Laufspur SA, SB der Tiefenführungselemente 24A, 24B, ausgerichtet. Die Sensoren 30A, 30B, insbesondere die Erfassungsbereiche 300A, 300B der Sensoren 30A, 30B, sind quer zur Fahrt- und/oder Arbeitsrichtung F der Reiheneinheit 20 zueinander derart versetzt, dass während dem Arbeitsvorgang mit dem ersten Sensor 30A die Laufspur SA des in Fahrtrichtung F gesehen rechten Tiefenführungselementes 24A und mit dem zweiten Sensor 30B die Laufspur SB des in Fahrtrichtung F gesehenen linken Tiefenführungselementes 24B erfasst und/oder abgetastet wird.

Wie außerdem zu erkennen ist, ist hier der zweite Sensor 30B bzw. dessen Erfassungsbereich 300B derart angeordnet und/oder ausgerichtet, dass zusätzlich die geöffnete Säfurche 230 während des Arbeitsvorgangs vom zweiten Sensor 30B zumindest teilweise erfasst und/oder abgetastet wird. Der zweite Sensor 30B ist somit dazu eingerichtet, die Tiefe und/oder Kontur der Säfurche 230 zumindest teilweise zu erfassen.

Mit anderen Worten ist der Erfassungsbereich 300A des ersten Sensoren 30A auf wenigstens einen von den Tiefenführungselementen 24A, 24B angedrückten Bereich des Bodens B, insbesondere die Laufspur SA, SB, ausgerichtet, während der Erfassungsbereich 300B des zweiten Sensoren 30B auf die geöffnete Säfurche 230 ausgerichtet ist. Der zweite Sensor 30B bzw. dessen Erfassungsbereich 300B ist hier erfindungsgemäß weiterhin derart angeordnet, dass er zusätzlich den angedrückten Bereich des Bodens B, insbesondere die Laufspur SB des jeweils anderen Tiefenführungselements 24B erfasst und/oder abtastet.

Anhand der Fig.2 und 3 ist außerdem eine optionale Fang- und/oder Andrückrolle 25 zu erkennen, welche in Fahrt- und/oder Arbeitsrichtung F, insbesondere unmittelbar, hinter dem Furchenöffnungselement 23 und/oder den Tiefenführungselementen 24A, 24B angeordnet ist. Die Fang- und/oder Andrückrolle 25 ist dazu eingerichtet, von der Materialablagevorrichtung 22 zugebrachte und/oder abgelegte Saatkörner K des Verteilguts zumindest teilweise in den Boden der Säfurche 230 anzudrücken und/oder zu versenken. Die Auswertevorrichtung 200 ist hierbei dazu eingerichtet, dass mittels dem Sensoren 30B erfasste angedrückte Verteilgut bei der Bestimmung der Ablagetiefe und/oder Bedeckungshöhe zu berücksichtigen. Insbesondere ist die Auswertevorrichtung 200 hierbei dazu eingerichtet, die Höhe und/oder den Anteil mit dem das Verteilgut bzw. die Saatkörner K in die Säfurche 230 angedrückt sind zu bestimmen und zu berücksichtigen.

Die Fig.2 zeigt außerdem ein in Fahrt- und/oder Arbeitsrichtung F, insbesondere beabstandet, hinter dem Furchenöffnungselement 23 angeordnete Furchenverschließungs- und/oder Andrückelemente 26, hier als Furchenverschließungs- und/oder Andrückrollen ausgeführt, welche v-förmig zueinander angestellt sind. Die Furchenverschließungs- und/oder Andrückelemente 26 sind dazu eingerichtet, die Säfurche 230 nach dem Ablegen des Verteilguts zumindest teilweise zu verschließen und/oder anzudrücken. Hierbei sei explizit erwähnt, dass die Reiheneinheit 20 alternativ auch ein einziges Furchenverschließungs- und/oder Andrückelement 26 aufweisen kann, welches zum Verschließen und/oder Andrücken der Säfurche 230 vorgesehen ist.

Des Weiteren ist ein optionaler weiterer Sensor 31 zu sehen, welcher über eine ebenfalls optionale Haltevorrichtung 27 an der Reiheneinheit 20 angeordnet ist.

Der Erfassungsbereich 310 des optionalen weiteren Sensoren 31 ist hier hinter den Furchenverschließungs- und/oder Andrückelementen 26 angeordnet und/oder ausgerichtet, während der Erfassungsbereich 300A, 300B wenigstens eines anderen Sensoren 30A, 30B, hier des ersten und/oder zweiten Sensoren 30A, 30B, vor den Furchenverschließungs- und/oder Andrückelementen 26 angeordnet und/oder ausgerichtet ist. Alternativ oder zusätzlich wäre auch denkbar, dass der Erfassungsbereich 300A, 300B des ersten oder zweiten Sensor 30A, 30B auf den Bereich hinter den Furchenverschließungs- und/oder Andrückelementen 26 ausgerichtet ist.

Außerdem ist zu erwähnen, dass die Auswertevorrichtung 200 optional dazu eingerichtet ist, die Plausibilität der erfassten und/oder bestimmten Ablagetiefe und/oder Bedeckungshöhe bzw. der Sensorsignale anhand vorgebbarer Betriebsparameter zu überprüfen. Die Auswertevorrichtung 200 ist insbesondere dazu eingerichtet, von den Sensoren 30A, 30B, 31 generierte Sensorsignale in Abhängigkeit der Plausibilität, insbesondere der Betriebsparameter, zu berücksichtigen und/oder zu filtern.

Weiterhin kann die Auswertevorrichtung 200 alternativ oder zusätzlich dazu eingerichtet sein, die Sensorsignale in Abhängigkeit der Plausibilität und/oder Betriebsparameter mit unterschiedlicher Gewichtung zur Bestimmung der Ablagetiefe und/oder Bedeckungshöhe zu berücksichtigen.

Beispielsweise kann hierbei vorgesehen sein, dass von der Auswertevorrichtung 200 der Betriebsparameter, z.B. der Schardruck, überwacht und mit den Sensorsignalen und/oder der bestimmten Ablagetiefe und/oder Bedeckungshöhe abgeglichen wird. Beispielsweise kann auch ein elektronisches Kennfeld, eine elektronische Funktion oder dergl. vorgebbar sein, welche den jeweiligen Betriebsparametern, z.B. Schardruck, definierte Soll-Ablagetiefen bzw. Soll-Sensorsignale zuordnet. Je nach Plausibilität, z.B. bei negativer Plausibilität, kann vorgesehen sein, dass die Auswertevorrichtung 200 einen oder mehrere der mehreren Sensoren 30A, 30B, 31 zumindest temporär unterschiedlich gewichtet oder ignoriert bzw. nicht berücksichtigt. Beispielsweise kann bei negativer Plausibilität vorgesehen sein, dass die Auswertevorrichtung 200 die Ablagetiefe und/oder Bedeckungshöhe zumindest temporär nur anhand eines der Sensoren 30A, 30B, 31 bestimmt.

Des Weiteren kann auch vorgesehen sein, dass die Auswertevorrichtung 200 dazu eingerichtet ist, dass Sensorsignal eines einzigen Sensoren 30A, 30B, 31 in unterschiedlicher Weise und in Abhängigkeit der Plausibilität zu berücksichtigen bzw. zu verrechnen. Beispielsweise kann hier vorgesehen sein, dass anhand des Sensorsignals des zweiten Sensoren 30B, welcher sowohl auf die Laufspur SB des Tiefenführungselementes 24B als auch auf die Säfurche 230 ausgerichtet ist, primär bzw. bei positiver Plausibilität der Abstand zum Boden der Säfurche 230 und sekundär bzw. bei negativer Plausibilität der Abstand zum Boden der Laufspur SB zur Bestimmung der Ablagetiefe und/oder Bedeckungshöhe berücksichtigt wird. Selbstverständlich kann Auswertung hier auch umgekehrt ausgeführt sein. Weiterhin wäre eine derartige Filterung der Sensorsignale alternativ oder zusätzlich auch für die anderen der mehreren Sensoren 30A, 31 denkbar.

Der wenigstens eine Betriebsparameter kann beispielsweise ein an der Reiheinheit 20 einstellbarer Schardruck oder dergl. sein, welcher vorgebbar, abrufbar und/oder erfassbar ist. Alternativ oder zusätzlich kann der Betriebsparameter auch Umweltbedingung sein, wie beispielsweise die Beschaffenheit der Nutzfläche sein, z.B. Temperatur und/oder Feuchte des Bodens. Weiterhin wären auch erfassbare Belastungen und/oder Kräfte an der Reiheneinheit 20, insbesondere den Tiefenführungselement 24A, 24B oder den Furchenöffnungselementen 23, als Betriebsparameter denkbar.

Es versteht sich, dass in den zuvor beschriebenen Ausführungsbeispielen genannte Merkmale nicht auf diese speziellen Kombinationen beschränkt und auch in beliebigen anderen Kombinationen möglich sind, wobei der Schutzumfang durch die angehängten Patentansprüche definiert wird. Weiterhin versteht es sich, dass in den Figuren gezeigte Geometrien nur beispielhaft sind und auch in beliebigen anderen Ausgestaltungen möglich sind.

### Bezugszeichenliste

- 1: Ackerschlepper
- 2: Balken
- 10: Einzelkornsämaschine
- 20: Reiheneinheit
- 200: Auswertevorrichtung
- 21: Behälter
- 22: Materialablagevorrichtung

- 23: Furchenöffnungselement
- 230: Säfurche
- 24A, 24B: Tiefenführungselemente
- 25: Fang- und/oder Andrückrolle
- 26: Furchenverschließungs- und/oder Andrückelement
- 27: Haltevorrichtung
- 30A: Erster Sensor
- 300A: Erfassungsbereich erster Sensor
- 30B: Zweiter Sensor
- 300B: Erfassungsbereich zweiter Sensor
- 31: Weiterer Sensor
- 310: Erfassungsbereich weiterer Sensor
- AA, AB: Aufstandsflächen
- B: Boden
- D: Drehachse
- F: Fahrtrichtung
- K: Saatkörner
- SA, SB: Laufspuren

## Patentansprüche

1. Reiheneinheit (20) für eine landwirtschaftliche Sämaschine (10) zum Ablegen von Verteilgut auf eine landwirtschaftlichen Nutzfläche, umfassend;
- wenigstens ein Furchenöffnungselement (23), insbesondere Schar, welches zum Öffnen einer Säfurche (230) vorgesehen ist;
- wenigstens eine Materialablagevorrichtung (22), welche zum bedarfsgerechten Zubringen des Verteilguts und zum Ablegen des Verteilguts innerhalb der Säfurche (230) vorgesehen ist;
- wenigstens ein Tiefenführungselement (24A, 24B), welches zum Einstellen einer definierten Ablagetiefe und/oder Bedeckungshöhe für das Verteilgut und/oder einer definierten Eindringtiefe des Furchenöffnungselements (23) in den Boden (B) der Nutzfläche vorgesehen ist; und
- wenigstens eine zugeordnete elektronische Auswertevorrichtung (200), welche mehrere der Reiheneinheit (20) zugeordnete Sensoren (30A, 30B, 31) umfasst, wobei die Sensoren (30A, 30B, 31) dazu eingerichtet sind, die Nutzfläche, vorzugsweise die Säfurche (230) und/oder den Boden (B) der Nutzfläche berührungslos, innerhalb eines den jeweiligen Sensoren (30A, 30B, 31) zugeordneten Erfassungsbereichs (300A, 300B, 310) abzutasten, und wobei die Auswertevorrichtung (200) dazu eingerichtet ist, die Ablagetiefe und/oder Bedeckungshöhe des in der Säfurche (230) abgelegten Verteilguts und/oder die Eindringtiefe des Furchenöffnungselements (23) anhand der Sensoren (30A, 30B, 31) zu bestimmen;
wobei die Sensoren (30A, 30B, 31) derart angeordnet sind, dass der Erfassungsbereich (300A, 300B, 310) der mehreren Sensoren (30A, 30B, 31) während dem Ablegen des Verteilguts und in Fahrt- und/oder Arbeitsrichtung (F) der Reiheneinheit (20) hinter einer Aufstandsfläche (AA, AB) des wenigstens einen Tiefenführungselements (24A, 24B) angeordnet ist und/oder sich befindet,
**dadurch gekennzeichnet, dass** der Erfassungsbereich (300A, 300B, 310) eines der mehreren Sensoren (30A, 30B, 31) auf den vom wenigstens einen Tiefenführungselement (24A, 24B) angedrückten Bereich des Bodens (B), vorzugsweise die Laufspur (SA, SB) des Tiefenführungselements (24A, 24B), einerseits und die geöffnete Säfurche (230) andererseits ausgerichtet ist.

2. Reiheneinheit (20) nach Anspruch 1, **dadurch gekennzeichnet, dass** die mehreren Sensoren (30A, 30B, 31) in Fahrt- und/oder Arbeitsrichtung (F) der Reiheneinheit (20) hinter der Aufstandsfläche (AA, AB), insbesondere einer Drehachse (D), des wenigstens einen Tiefenführungselements (24A, 24B) angeordnet sind.

3. Reiheneinheit (20) nach Anspruch 1 oder 2, **dadurch gekennzeichnet, dass** die Sensoren (30A, 30B, 31), vorzugsweise die Erfassungsbereiche (300A, 300B, 310) der Sensoren (30A, 30B, 31), quer zur Fahrt- und/oder Arbeitsrichtung (F) der Reiheneinheit (20) zueinander versetzt sind.

4. Reiheneinheit (20) nach zumindest einem der vorgenannten Ansprüche, umfassend wenigstens ein Furchenverschließungs- und/oder Andrückelement (26), welches in Fahrt- und/oder Arbeitsrichtung (F), vorzugsweise beabstandet, hinter dem Furchenöffnungselement (23) angeordnet und dazu eingerichtet ist, die Säfurche (230) nach dem Ablegen des Verteilguts zumindest teilweise zu verschließen und/oder anzudrücken, **dadurch gekennzeichnet, dass** der Erfassungsbereich (300A, 300B, 310) eines der mehreren Sensoren (30A, 30B, 31) hinter dem Furchenverschließungs- und/oder Andrückelement (26) und der Erfassungsbereich (300A, 300B, 310) wenigstens eines anderen der mehreren Sensoren (30A, 30B, 31) vor dem Furchenverschließungs- und/oder Andrückelement (26) angeordnet ist bzw. sich befindet.

5. Reiheneinheit (20) nach zumindest einem der vorgenannten Ansprüche, **dadurch gekennzeichnet, dass** wenigstens einer der mehreren Sensoren (30A, 30B, 31) derart angeordnet und dazu eingerichtet ist, das von einer hinter dem Furchenöffnungselement (23) und/oder dem Tiefenführungselement (24A, 24B) angeordneten Fang- und/oder Andrückrolle (25) in die Säfurche (230) zumindest teilweise angedrückte Verteilgut zu erfassen, wobei die Auswertevorrichtung (200) vorzugweise dazu eingerichtet ist, dass erfasste angedrückte Verteilgut bei der Bestimmung der Ablagetiefe und/oder Bedeckungshöhe zu berücksichtigen, und wobei die Auswertevorrichtung (200) anhand des erfassten angedrückten Verteilguts besonders vorzugsweise dazu eingerichtet ist, die Höhe und/oder den Anteil mit dem das Verteilgut in die Säfurche (230) angedrückt ist zu bestimmen.

6. Reiheneinheit (20) nach Anspruch 1, **dadurch gekennzeichnet, dass** die Auswertevorrichtung (200) dazu eingerichtet ist, die Plausibilität der erfassten und/oder bestimmten Ablagetiefe und/oder Bedeckungshöhe anhand vorgebbarer Betriebsparameter, insbesondere eines Schardrucks und/oder einer Aufstandskraft der Reiheneinheit (20) und/oder einer Beschaffenheit der Nutzfläche, zu überprüfen, wobei die Auswertevorrichtung (200) vorzugsweise dazu eingerichtet ist, von den Sensoren (30A, 30B, 31) generierte Sensorsignale in Abhängigkeit der Plausibilität, insbesondere der Betriebsparameter, zu berücksichtigen und/oder zu filtern.

7. Landwirtschaftliche Sämaschine, insbesondere Einzelkornsämaschine (10), zum Ablegen von Verteilgut, insbesondere Saatgut und/oder Dünger, auf eine landwirtschaftlichen Nutzfläche, mit einer oder mehreren Reiheinheiten, **dadurch gekennzeichnet, dass** die eine oder die mehreren Reiheneinheiten (10) nach zumindest einem der vorgenannten Ansprüche ausgebildet sind.

8. Verfahren zur Bestimmung einer Ablagetiefe und/oder Bedeckungshöhe eines mittels einer Reiheneinheit (20) einer landwirtschaftlichen Sämaschine (10) auf einer landwirtschaftlichen Nutzfläche abgelegten Verteilguts, mit den Schritten:
- Öffnen einer Säfurche (230) entlang der Nutzfläche, mittels wenigstens eines der Reiheneinheit (20) zugeordneten Furchenöffnungselements (23), insbesondere Schars;
- Zubringen und/oder Ablegen des Verteilguts innerhalb der Säfurche (230), mittels wenigstens einer der Reiheneinheit (20) zugeordneten Materialablagevorrichtung (22);
- Einstellen einer definierten Ablagetiefe und/oder Bedeckungshöhe für das Verteilgut und/oder einer definierten Eindringtiefe des Furchenöffnungselements (23) in den Boden (B) der Nutzfläche, mittels wenigsten einem der Reiheneinheit (20) zugeordneten Tiefenführungselements (24A, 24B); und
- Erfassen und/oder Bestimmen einer Ablagetiefe und/oder Bedeckungshöhe des in der Säfurche (230) abgelegten Verteilguts, mittels wenigstens einer der Reiheneinheit (20) zugeordneten Auswertevorrichtung (200), wobei die Auswertevorrichtung (200) mehrere Sensoren (30A, 30B, 31) umfasst, welche die Nutzfläche, vorzugsweise die Säfurche (230) und/oder den Boden (B) der Nutzfläche berührungslos, innerhalb eines den jeweiligen Sensoren (30A, 30B, 31) zugeordneten Erfassungsbereichs (300A, 300B, 310) während des Ablegens des Verteilguts abtasten;
wobei die Sensoren (30A, 30B, 31) derart angeordnet sind, dass sich der Erfassungsbereich (300A, 300B, 310) der mehreren Sensoren (30A, 30B, 31) während dem Ablegen des Verteilguts und in Fahrt- und/oder Arbeitsrichtung (F) der Reiheneinheit (20) hinter einer Aufstandsfläche (AA, AB) des wenigstens einen Tiefenführungselements (24A, 24B) befindet,
**dadurch gekennzeichnet, dass** die Reiheneinheit (20) nach zumindest einem der vorgenannten Ansprüche 1 bis 6 ausgebildet ist.

9. Verfahren nach Anspruch 8, **dadurch gekennzeichnet, dass** anhand der Sensoren (30A, 30B, 31), insbesondere dem Erfassungsbereich (300A, 300B, 310) der Sensoren (30A, 30B, 31), die Nutzfläche, insbesondere die Säfurche (230) und/oder der Boden (B) der Nutzfläche, hinter der Aufstandsfläche (AA, AB) des wenigstens einen Tiefenführungselements (24A, 24B) erfasst und/oder abgetastet wird.

## Claims

1. Row unit (20) for an agricultural seed drill (10) for depositing distribution material onto agricultural land, comprising;
- at least one furrow opening element (23), in particular a share, which is provided for opening a seed furrow (230);
- at least one material depositing device (22), which is provided for supplying the distribution material as required and for depositing the distribution material within the seed furrow (230);
- at least one depth guidance element (24A, 24B), which is provided for setting a defined deposition depth and/or coverage height for the distribution material and/or a defined penetration depth of the furrow opening element (23) into the soil (B) of the land; and
- at least one assigned electronic evaluation device (200), which comprises a plurality of sensors (30A, 30B, 31) assigned to the row unit (20), the sensors (30A, 30B, 31) being configured to contactlessly scan the land, preferably the seed furrow (230) and/or the soil (B) of the land, within a detection range (300A, 300B, 310) assigned to the respective sensors (30A, 30B, 31), and the evaluation device (200) being configured to determine the deposition depth and/or coverage height of the distribution material deposited in the seed furrow (230) and/or the penetration depth of the furrow opening element (23) on the basis of the sensors (30A, 30B, 31);
the sensors (30A, 30B, 31) being arranged such that, during the deposition of the distribution material and in the direction of travel and/or work (F) of the row unit (20), the detection range (300A, 300B, 310) of the plurality of sensors (30A, 30B, 31) is arranged and/or located behind a contact area (AA, AB) of the at least one depth guidance element (24A, 24B),
**characterized in that** the detection range (300A, 300B, 310) of one of the plurality of sensors (30A, 30B, 31) is aligned on the one hand with the region of the soil (B) being pressed against by the at least one depth guidance element (24A, 24B), preferably the track line (SA, SB) of the depth guidance element (24A, 24B), and the opened seed furrow (230) on the other.

2. Row unit (20) according to claim 1, **characterized in that** the plurality of sensors (30A, 30B, 31), in the direction of travel and/or work (F) of the row unit (20), are arranged behind the contact area (AA, AB), in particular behind a rotation axis (D), of the at least one depth guidance element (24A, 24B).

3. Row unit (20) according to claim 1 or 2, **characterized in that** the sensors (30A, 30B, 31), preferably the detection ranges (300A, 300B, 310) of the sensors (30A, 30B, 31), are offset from each other transversely to the direction of travel and/or work (F) of the row unit (20).

4. Row unit (20) according to at least one of the preceding claims, comprising at least one furrow closing and/or pressing element (26), which, in the direction of travel and/or work (F), is arranged behind the furrow opening element (23), preferably distanced therefrom, and is configured to at least partially close and/or press the seed furrow (230) after the distribution material has been deposited, **characterized in that** the detection range (300A, 300B, 310) of one of the plurality of sensors (30A, 30B, 31) is arranged or located behind the furrow closing and/or pressing element (26), and the detection range (300A, 300B, 310) of at least one other of the plurality of sensors (30A, 30B, 31) is arranged or located in front of the furrow closing and/or pressing element (26).

5. Row unit (20) according to at least one of the preceding claims, **characterized in that** at least one of the plurality of sensors (30A, 30B, 31) is arranged and configured so as to detect the distribution material, which is at least partially pressed into the seed furrow (230) by a catching and/or pressing roller (25) arranged behind the furrow opening element (23) and/or the depth guidance element (24A, 24B), the evaluation device (200) preferably being configured to take into account the detected pressed-in distribution material when determining the deposition depth and/or coverage height, and the evaluation device (200) particularly preferably being configured to determine, on the basis of the detected pressed-in distribution material, the height and/or the amount with which the distribution material is pressed into the seed furrow (230).

6. Row unit (20) according to claim 1, **characterized in that** the evaluation device (200) is configured to check the plausibility of the detected and/or determined deposition depth and/or coverage height on the basis of predefinable operating parameters, in particular a share pressure and/or a contact force of the row unit (20) and/or a condition of the land, the evaluation device (200) preferably being configured to take into account and/or filter sensor signals generated by the sensors (30A, 30B, 31) depending on the plausibility, in particular on the operating parameters.

7. Agricultural seed drill, in particular a precision seed drill (10), for depositing distribution material, in particular seed and/or fertilizer, onto agricultural land, comprising one or more row units, **characterized in that** the one or more row units (10) are designed according to at least one of the preceding claims.

8. Method for determining a deposition depth and/or coverage height of a distribution material deposited on agricultural land by means of a row unit (20) of an agricultural seed drill (10), comprising the steps of:
- opening a seed furrow (230) along the land by means of at least one furrow opening element (23) assigned to the row unit (20), in particular a share;
- supplying and/or depositing the distribution material within the seed furrow (230) by means of at least one material depositing device (22) assigned to the row unit (20);
- setting a defined deposition depth and/or coverage height for the distribution material and/or a defined penetration depth of the furrow opening element (23) into the soil (B) of the land, by means of at least one depth guidance element (24A, 24B) assigned to the row unit (20); and
- detecting and/or determining the deposition depth and/or coverage height of the distribution material deposited in the seed furrow (230) by means of at least one evaluation device (200) assigned to the row unit (20), the evaluation device (200) comprising a plurality of sensors (30A, 30B, 31) which, during the deposition of the distribution material, contactlessly scan the land, preferably the seed furrow (230) and/or the soil (B) of the land, within a detection range (300A, 300B, 310) assigned to the respective sensors (30A, 30B, 31);
the sensors (30A, 30B, 31) being arranged such that, during the placement of the distribution material and in the direction of travel and/or work (F) of the row unit (20), the detection range (300A, 300B, 310) of the plurality of sensors (30A, 30B, 31) is located behind a contact area (AA, AB) of the at least one depth guidance element (24A, 24B),
**characterized in that** the row unit (20) is designed according to at least one of the preceding claims 1 to 6.

9. Method according to claim 8, **characterized in that**, on the basis of the sensors (30A, 30B, 31), in particular of the detection range (300A, 300B, 310) of the sensors (30A, 30B, 31), the land, in particular the seed furrow (230) and/or the soil (B) of the land, is detected and/or scanned behind the contact area (AA, AB) of the at least one depth guidance element (24A, 24B).

## Revendications

1. Unité de rangée (20) pour un semoir agricole (10), permettant la dépose de matière à distribuer sur une surface agricole utile, comprenant :
- au moins un élément d'ouverture de sillon (23), en particulier un soc, lequel élément d'ouverture de sillon est prévu pour l'ouverture d'un sillon de semis (230) ;
- au moins un dispositif de dépose de matériau (22), lequel est prévu pour l'acheminement de la matière à distribuer en fonction des besoins et pour la dépose de la matière à distribuer à l'intérieur du sillon de semis (230) ;
- au moins un élément de guidage en profondeur (24A, 24B), lequel est prévu pour le réglage d'une profondeur de dépose définie et/ou d'une hauteur de recouvrement pour la matière à répartir et/ou d'une profondeur de pénétration définie de l'élément d'ouverture de sillon (23) dans le sol (B) de la surface utile ; et
- au moins un dispositif d'évaluation (200) électronique associé, lequel comprend plusieurs capteurs (30A, 30B, 31) associés à l'unité de rangée (20), dans lequel les capteurs (30A, 30B, 31) sont configurés pour balayer sans contact la surface utile, de préférence le sillon de semis (230) et/ou le sol (B) de la surface utile, à l'intérieur d'une zone de détection (300A, 300B, 310) associée aux capteurs (30A, 30B, 31) respectifs, et dans lequel le dispositif d'évaluation (200) est configuré pour déterminer, à l'aide des capteurs (30A, 30B, 31), la profondeur de dépose et/ou la hauteur de recouvrement de la matière à distribuer déposée dans le sillon de semis (230) et/ou la profondeur de pénétration de l'élément d'ouverture de sillon (23) ;
dans lequel les capteurs (30A, 30B, 31) sont disposés de telle sorte que la zone de détection (300A, 300B, 310) de la pluralité de capteurs (30A, 30B, 31) est disposée et/ou se trouve derrière une surface de contact (AA, AB) de l'au moins un élément de guidage en profondeur (24A, 24B) pendant la dépose de la matière à distribuer et dans la direction de déplacement et/ou de travail (F) de l'unité de rangée (20),
**caractérisée en ce que** la zone de détection (300A, 300B, 310) de l'un de la pluralité de capteurs (30A, 30B, 31) est orientée vers la zone du sol (B), laquelle zone est pressée par l'au moins un élément de guidage en profondeur (24A, 24B), de préférence vers la voie de roulement (SA, SB) de l'élément de guidage en profondeur (24A, 24B), d'une part, et vers le sillon de semis (230) ouvert, d'autre part.

2. Unité de rangée (20) selon la revendication 1, **caractérisée en ce que** les nombreux capteurs (30A, 30B, 31) sont disposés dans la direction de déplacement et/ou de travail (F) de l'unité de rangée (20) derrière la surface de contact (AA, AB), en particulier derrière un axe de rotation (D), de l'au moins un élément de guidage en profondeur (24A, 24B).

3. Unité de rangée (20) selon la revendication 1 ou 2, **caractérisée en ce que** les capteurs (30A, 30B, 31), de préférence les zones de détection (300A, 300B, 310) des capteurs (30A, 30B, 31), sont décalés les uns par rapport aux autres transversalement à la direction de déplacement et/ou de travail (F) de l'unité de rangée (20).

4. Unité de rangée (20) selon au moins l'une des revendications précédentes, comprenant au moins un élément de fermeture et/ou de pression de sillon (26), lequel est disposé dans la direction de déplacement et/ou de travail (F), de préférence à distance, derrière l'élément d'ouverture de sillon (23), et qui est configuré pour fermer et/ou presser au moins partiellement le sillon de semis (230) après la dépose de la matière à distribuer, **caractérisée en ce que** la zone de détection (300A, 300B, 310) de l'un des nombreux capteurs (30A, 30B, 31) est disposée ou se trouve derrière l'élément de fermeture et/ou de pression de sillon (26), et la zone de détection (300A, 300B, 310) d'au moins un autre des nombreux capteurs (30A, 30B, 31) est disposée ou se trouve devant l'élément de fermeture et/ou de pression de sillon (26).

5. Unité de rangée (20) selon au moins l'une des revendications précédentes, **caractérisée en ce qu'**au moins l'un des nombreux capteurs (30A, 30B, 31) est disposé et configuré de façon à détecter la matière à distribuer pressée au moins partiellement dans le sillon de semis (230) par un rouleau d'arrêt et/ou de pression (25) disposé derrière l'élément d'ouverture de sillon (23) et/ou l'élément de guidage en profondeur (24A, 24B), dans lequel le dispositif d'évaluation (200) est de préférence configuré pour tenir compte de la matière à distribuer pressée détectée lors de la détermination de la profondeur de dépose et/ou de la hauteur de recouvrement, et dans lequel le dispositif d'évaluation (200) est de préférence configuré pour déterminer, en fonction de la matière à distribuer pressée détectée, la hauteur et/ou la proportion avec laquelle la matière à distribuer est pressée dans le sillon de semis (230).

6. Unité de rangée (20) selon la revendication 1, **caractérisée en ce que** le dispositif d'évaluation (200) est configuré pour vérifier la plausibilité de la profondeur de dépose et/ou de la hauteur de recouvrement détectées et/ou déterminées à l'aide de paramètres de fonctionnement prédéfinissables, en particulier d'une pression de soc et/ou d'une force de contact de l'unité de rangée (20) et/ou d'une nature de la surface utile, dans lequel le dispositif d'évaluation (200) est de préférence configuré pour tenir compte des et/ou filtrer les signaux de capteur générés par les capteurs (30A, 30B, 31) en fonction de la plausibilité, en particulier des paramètres de fonctionnement.

7. Semoir agricole, en particulier semoir monograine (10), permettant la dépose de matière à distribuer, en particulier de semences et/ou d'engrais, sur une surface agricole utile, à l'aide d'une ou de plusieurs unités de rangée, **caractérisé en ce que** l'une ou les nombreuses unités de rangée (10) sont réalisées selon au moins l'une des revendications précédentes.

8. Procédé permettant la détermination d'une profondeur de dépose et/ou d'une hauteur de recouvrement d'une matière à distribuer déposée sur une surface agricole utile à l'aide d'une unité de rangée (20) d'un semoir agricole (10), comportant les étapes consistant à :
- ouvrir un sillon de semis (230) le long de la surface utile, à l'aide d'au moins un élément d'ouverture de sillon (23), en particulier un soc, associé à l'unité de rangée (20) ;
- acheminer et/ou déposer la matière à distribuer à l'intérieur du sillon de semis (230), à l'aide d'au moins un dispositif de dépose de matériau (22) associé à l'unité de rangée (20) ;
- régler une profondeur de dépose définie et/ou une hauteur de recouvrement définie pour la matière à distribuer et/ou une profondeur de pénétration définie de l'élément d'ouverture de sillon (23) dans le sol (B) de la surface utile, à l'aide d'au moins un élément de guidage en profondeur (24A, 24B) associé à l'unité de rangée (20) ; et
- détecter et/ou déterminer une profondeur de dépose et/ou une hauteur de recouvrement de la matière à distribuer déposée dans le sillon de semis (230), à l'aide d'au moins un dispositif d'évaluation (200) associé à l'unité de rangée (20), dans lequel le dispositif d'évaluation (200) comprend plusieurs capteurs (30A, 30B, 31), lesquels balaient sans contact la surface utile, de préférence le sillon de semis (230) et/ou le sol (B) de la surface utile, à l'intérieur d'une zone de détection (300A, 300B, 310) associée aux capteurs (30A, 30B, 31) respectifs pendant la dépose de la matière à distribuer ;
dans lequel les capteurs (30A, 30B, 31) sont disposés de telle sorte que la zone de détection (300A, 300B, 310) de la pluralité de capteurs (30A, 30B, 31) se trouve derrière une surface de contact (AA, AB) de l'au moins un élément de guidage en profondeur (24A, 24B) pendant la dépose de la matière à distribuer et dans la direction de déplacement et/ou de travail (F) de l'unité de rangée (20),
**caractérisé en ce que** l'unité de rangée (20) est réalisée selon au moins l'une des revendications 1 à 6 précédentes.

9. Procédé selon la revendication 8, **caractérisé en ce que,** à l'aide des capteurs (30A, 30B, 31), en particulier de la zone de détection (300A, 300B, 310) des capteurs (30A, 30B, 31), la surface utile, en particulier le sillon de semis (230) et/ou le sol (B) de la surface utile, est détectée et/ou balayée derrière la surface de contact (AA, AB) de l'au moins un élément de guidage en profondeur (24A, 24B).
